# EUROPEAN PATENT APPLICATION

(11) **EP 4 517 884 A1**
(43) Date of publication of application: **05.03.2025**
(21) Application number: 24197575.4
(22) Date of filing: 30.08.2024
(51) Int. Cl.: H01M 4/62, C08C 19/00, C08C 19/10, H01M 10/052

(54) **METHOD FOR VISUALISING BINDER DISTRIBUTION IN AN ELECTRODE USING ORGANIC FLUORESCENT TAG**

(30) Priority: 31.08.2023 SE 2351025
(71) Applicant: Northvolt AB, 112 47 Stockholm (SE)
(72) Inventor: Pohlman, Andrew, 932 35 Ursviken (SE)
(74) Representative: Engman, Eva Jessica

(57) **Abstract**

This disclosure provides a method of tagging binders in electrodes to allow for easy visualization. In particular, environmentally friendly organic molecules are used as organic fluorescent tags. The organic fluorescent tag will react with alkene moieties within the binder through cycloadditions to introduce a fluorescent tag, which is easily visualized to allow visualisation of binder distribution within the electrode.

## Description

### FIELD OF INVENTION

The present invention relates to methods of visualising binder distribution in an electrode active layer. More specifically, the invention relates to the tagging of a binder with an organic fluorescent tag to allow for easy visualization.

### BACKGROUND

There has been significant interest in the use of rechargeable batteries for use in energy storage applications. In particular, lithium-ion batteries have been widely applied in diverse industries, such as electronic devices, power tools, satellites, utility-scale storage and electric vehicles.

Lithium-ion battery electrodes typically comprise active materials, binders, and conductive additives. Binders and conductive additives are essential components for electrodes, but their proportions must be minimized to maximize the energy density of lithium-ion batteries.

Achieving a uniform distribution of these materials in the electrode maximizes their function at a minimal content, contributing to high energy density and improved battery quality.

However, during fabrication the binder may start migration resulting in an uneven distribution of binder throughout the battery. The uneven distribution causes a significant reduction in adhesion properties, electrical conductivity, and performance of the battery. Further, the binder migration increases the risk of delamination of the electrode.

Therefore, an accurate method for monitoring the binder distribution within an electrode is desirable.

Some binders have an inbuilt ability to easily get monitored. For example, polyvinylidene fluoride (PVDF) contains fluorine which allows for easy monitoring. However, PVDF suffers from several drawbacks, such as low binding affinity, poor electrochemical and thermal stability, poor processability in water and potential toxicity.

A more environmentally friendly binder is styrene butadiene rubber (SBR). However, given that both anodes and cathodes comprise other sources of carbon (such as graphene and conductive carbon additives), SBR requires tagging to be visualized by standard microscopy or spectroscopy methods.

Currently, the osmium tetroxide (OsO₄) staining technique is used. OsO₄ reacts with the double bonds (alkenes) of SBR through a cycloaddition to allow for easy monitoring. This technique is a post battery fabrication process and so it does not interfere with the manufacturing process.

However, osmium tetroxide is highly toxic and expensive making it an unappealing reagent to use in large quantities.

The objective technical problem is therefore to find a less expensive and safer alternative to tag the binder to easily visualise the binder distribution.

The present invention aims to tag the binder material having alkene moieties with an organic fluorescent tag to easily detect binder migration. Instead of using toxic and expensive materials, more environmentally benign as well as less expensive organic molecules are used.

### SUMMARY

The object of the present disclosure is to provide a method of tagging binders for easy visualization. In particular, inexpensive and environmentally friendly organic molecules are used as organic fluorescent tags, which react through cycloadditions with alkene moieties of the binder to form a tagged binder.

According to an aspect of the present disclosure, there is provided a method for visualising binder distribution in an electrode comprising the steps of;
i. providing an electrode comprising an electrode active layer, said electrode active layer comprising electrode active material and a binder, wherein the binder comprises a polymer with alkene moieties;
ii. cross-sectioning said electrode;
iii. exposing said electrode to an organic fluorescent tag, wherein said organic fluorescent tag couples to said binder via the alkene moiety to form a tagged binder;
iv. using fluorescence microscopy to visualise the tagged binder.

While the disclosure is amenable to various modifications and alternative forms, specifics thereof have been shown by way of example and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description.

### DETAILED DESCRIPTION

The disclosure relates to a method of tagging alkene containing binders for easy visualisation of binder distribution. The alkene containing binders react through a cycloaddition with an organic fluorescent tag. The organic fluorescent tag contains a fluorophore (a fluorescent tag), which can be visualized using a fluorescence microscope, and a linker moity, which reacts with the alkenes of the binder.

Importantly, the organic fluorescent tag does not interfere with other components within the battery such as electrode active material and conductive additives.

In the following sections, various components are presented:

### ELECTRODE ACTIVE MATERIALS

The term "electrode active material" is to be understood as an electrochemical species which can be oxidised and reduced in a system which enables a cell to produce electric energy during discharge. The role of the electrode active materials is to reversibly bind ions (such as lithium ions) during cell charge and discharge cycles.

Electrode active materials include anode active materials and cathode active materials.

Each electrode may comprise electrode active materials, conductive additives, and a binder.

In each electrode, the electrode active material may be present in an amount of from about 60-99.9 wt% active material, for example from about 70-99.9 wt%, from about 80-99.8 wt%, from about 90-99.6 wt%, or from about 95-99.5 wt% active material based on the total weight of the dry composition (i.e. the slurry composition excluding the dispersing medium, or alternatively the electrode).

Preferably the active layer comprises from about 96-99.5 wt% active material, even more preferably the active layer comprises about 98 wt% active material based on the total weight of the dry composition (i.e. the slurry composition excluding the dispersing medium, or alternatively the electrode).

### Anode

The cell may comprise an anode. The anode may comprise an anode active material, such as metallic lithium, lithium/aluminium alloys, lithium/tin alloys, carbon, graphite, black lead, silicon, silicon/silicon composite, or a combination thereof. The anode may further comprise conductive additives and a binder.

The role of the anode active material is to reversibly bind the lithium. The mechanism of binding will vary and may be by intercalation/deintercalation (for instance with graphite), alloying/dealloying (for instance with silicon), or by plating/stripping (for instance with metallic lithium), or combinations thereof.

Preferably, the anode comprises carbon and/or silicon.

Suitable anode active materials are selected from silicon, SiOx, silicon-carbon composites, prelithiated silicon or its composites and oxides, types of carbon, including natural and synthetic carbons, graphite, carbon black, active carbon, carbon fibres, cokes and other carbonaceous materials.

In the anode, the anode active material may be present in an amount of from about 60-99.9 wt% active material, for example from about 70-99.9 wt%, from about 80-99.8 wt%, from about 90-99.6 wt%, or from about 95-99.5 wt% active material based on the total weight of the dry composition (i.e. the slurry composition excluding the dispersing medium, or alternatively the electrode).

Preferably the active layer comprises from about 96-99.5 wt% active material, even more preferably the active layer comprises about 98 wt% active material based on the total weight of the dry composition (i.e. the slurry composition excluding the dispersing medium, or alternatively the electrode).

### Cathode

The cell may comprise a cathode. The cathode may comprise cathode active material. The cathode may further comprise conductive additives and a binder.

The cathode active material may comprise a suitable material for use as an electrochemically active material in the cathode of a cell, particularly a lithium-ion cell.

The cathode active material may comprise an intercalation material, such as a lithium intercalation material, for example a lithium metal oxide which may include lithium and a transition metal.

The cathode active material may comprise any one or a mixture of two or more of lithium manganese oxide, lithium nickel oxide, lithium cobalt oxide, lithium nickel manganese oxide (LNMO), lithium nickel cobalt oxide, lithium nickel manganese cobalt oxide (NMC), lithium iron phosphate (LFP), lithium iron manganese phosphate (LFMP) and lithium nickel cobalt aluminium oxide (NCA).

Preferably, the cathode active material comprises lithium nickel manganese cobalt oxide (NMC).

The role of the cathode active material is to reversibly bind the lithium. The mechanism of binding will vary and may be by intercalation/deintercalation.

In the cathode, the cathode active material may be present in an amount of from about 60-99.9 wt% active material, for example from about 70-99.9 wt%, from about 80-99.8 wt%, from about 90-99.6 wt%, or from about 95-99.5 wt% active material based on the total weight of the dry composition (i.e. the slurry composition excluding the dispersing medium, or alternatively the electrode).

Preferably the active layer comprises from about 96-99.5 wt% active material, even more preferably the active layer comprises about 98 wt% active material based on the total weight of the dry composition (i.e. the slurry composition excluding the dispersing medium, or alternatively the electrode).

### CONDUCTIVE ADDITIVES

The role of the conductive additives is to improve the electronic properties of the cathode and to provide an electrical connection between the particles of cathode active material in the cathode. As it is present merely to improve conductivity, it is optional as the inherent conductivity of the electrode active material may be sufficient.

For example, the conductive additives may comprise carbon black, acetylene black, graphene, graphite, mesocarbon microbead (MCMB), pitch-based carbon, coke powders, single-walled, thin-walled and/or multi-walled carbon nanotubes, metallic powders, or a combination thereof.

Preferred conductive additives are selected from carbon black, acetylene black, carbon nanotubes, or a combination thereof.

In some embodiments, no conductive additives are added to prepare the slurry. The omission of additional conductive additives in the slurry results in a battery with higher energy density, as the active material will constitute a bigger proportion of the cathode.

In an embodiment, the conductive additives may be present in an amount of from about 0 wt% to about 6 wt%, for example from 0 wt% to about 4 wt%, such as from about 0 wt% to about 3 wt%, preferably from about 0.1 wt% to 2 wt%, or from about 0.3 wt% to 2 wt%, based on the total weight of the dry composition (i.e. the slurry composition excluding the dispersing medium, or alternatively the electrode).

### BINDER

The binder polymer provides adhesive properties to the electrode, resulting in good adhesion of all the electrode components and improved peel strength. This leads to improved cycle life of the cell compared to a cathode that does not contain the binder polymer.

The binder of the present disclosure comprises polymers or copolymers with alkene moieties. Exemplary binders include styrene-butadiene rubber (SBR), fluorine-based rubber, ethylene propylene rubber, butadiene rubber, isoprene rubber, acrylonitrile butadiene rubber (NBR).

Preferably the binders comprise polymers or copolymers of butadiene such as polybutadiene, styrene butadiene rubber (SBR), and acrylonitrile butadiene rubber (NBR). Preferably, the binder comprises styrene butadiene rubber (SBR).

Preferably, the binder is present in a small amount such as below 8 wt%, for example below 5 wt%, such as from 0.1 to 3 wt%, for example from 0.3 to 1.5 wt% based on the weight of the solids. The remainder of the solids are constituted of the electrode active materials and conductive additives.

### ELECTRODE ACTIVE LAYER

An electrode of this disclosure comprises a current collector and an electrode active layer.

In the context of this disclosure, an 'electrode active layer' is a layer comprising binder, electrode active material, and optionally a conductive additive.

To produce an electrode active layer, electrode active material, a binder and optionally conductive additives are typically dispersed in a dispersing medium to form a slurry. The slurry is then deposited on a current collector to form the cathode active layer. Any suitable dispersing medium may be used for the slurry.

### CELL

The cell may include at least a cathode and an anode. The cell typically also comprises a separator disposed between the anode and cathode, said cathode, anode and separator forming an electrode assembly. The cell will typically comprise an electrolyte to facilitate the transport of lithium ions between the cathode and the anode, and a housing which is sealed to ensure the electrolyte is retained within the housing.

The cell may be a cylindrical, prismatic, coin cell or pouch cell.

The cell may be a lithium-ion cell, such as a secondary lithium-ion cell.

The present disclosure also relates to cells comprising the tagged binder of the disclosure.

These cells may be combined to form a battery system (i.e. an array of cells).

The cell or battery system may be used in a device, particularly a vehicle.

### ORGANIC FLUORESCENT TAGS

The method of the disclosure utilises an organic fluorescent tag to form a tagged binder, that is a binder comprising a polymer bound to an organic fluorescent tag.

Preferably, the organic fluorescent tag does not react with other components within a cell such as electrode active material and conductive additives.

The organic fluorescent tag typically comprises three parts: namely a "fluorescent moiety"; a "coupling moiety" and a "linker moiety".

Together, the coupling moiety and linker moiety connect the fluorescent moiety to the binder polymer, for instance to the backbone of the binder polymer. The coupling moiety will react with and covalently bond to the polymer backbone (typically forming a cycloaddition adduct), with the linker moiety acting as a spacer between the coupling moiety and the fluorescent moiety.

The fluorescent moiety is capable of fluorescence when subjected to a suitable stimulus, such as UV radiation. Typically, the fluorescence will be quenched when the organic fluorescent tag is not bound via the linker moiety/coupling moiety to a substrate such as the polymer backbone of the binder. The quenching is typically via the coupling moiety, which converts to a form which no longer quenches the fluorescent moiety when the coupling moiety reacts and forms the adduct with the polymer backbone.

The choice of fluorescent moiety is not particularly limited and may include dyes known by the person skilled in the art. For example, the fluorescent moiety may include dyes such as BODIPY, ATTO, Oregon Green, HELIOS, 5-TAMRA, rhodamine, silicon-rhodamine, cresyl violet, coumarin 343, phenoxazine and analogs thereof.

By analog is meant a chemical structure that is structurally similar to the specific molecule. Usually, an analog differs from the original molecule in the possession and/or position of one or more functional groups or substructures.

Exemplary fluorescent moieties comprise the following as well as analogs thereof:

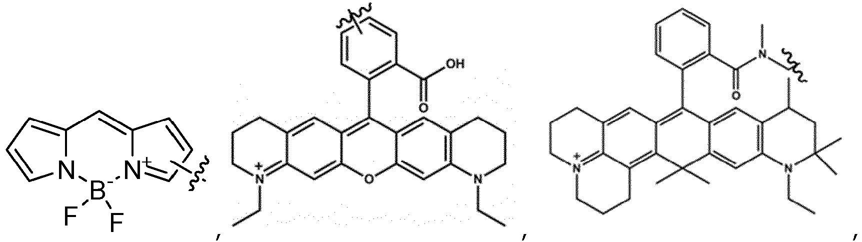

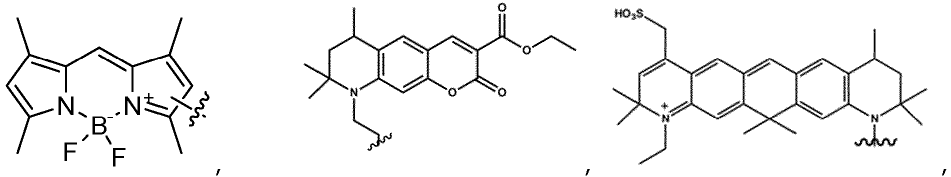

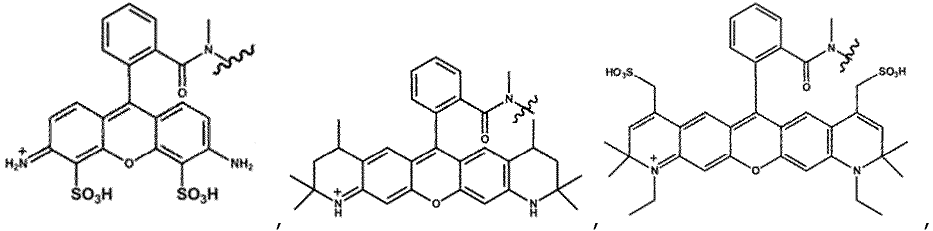

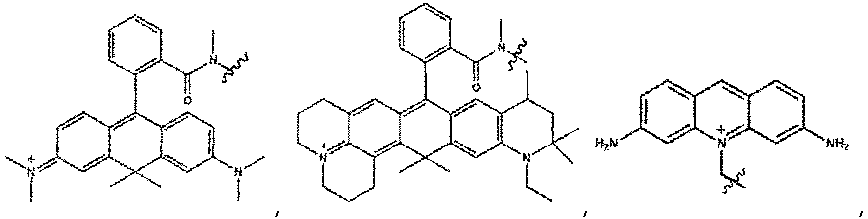

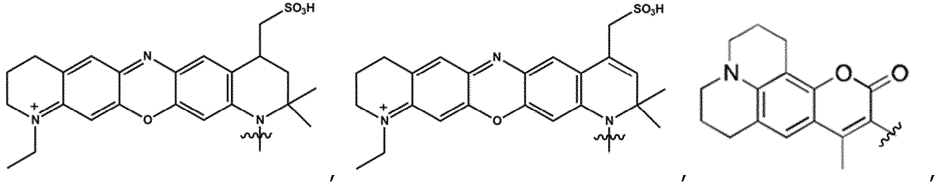

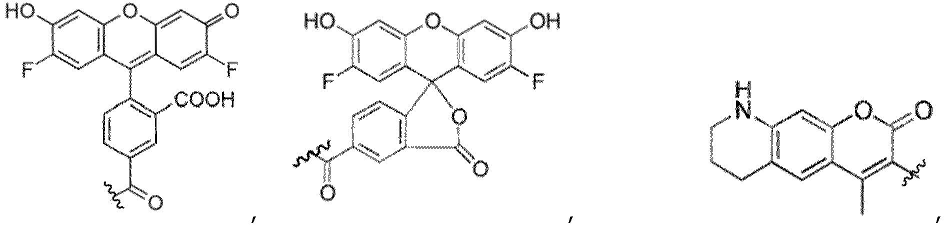

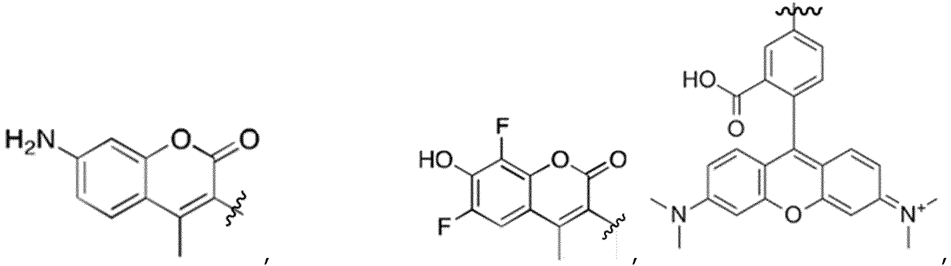

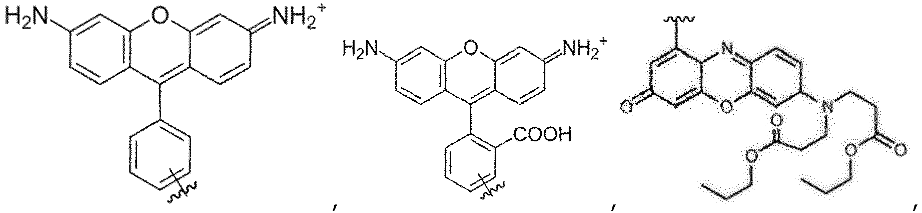

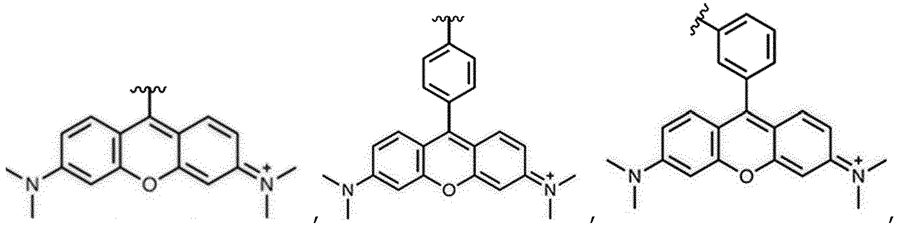

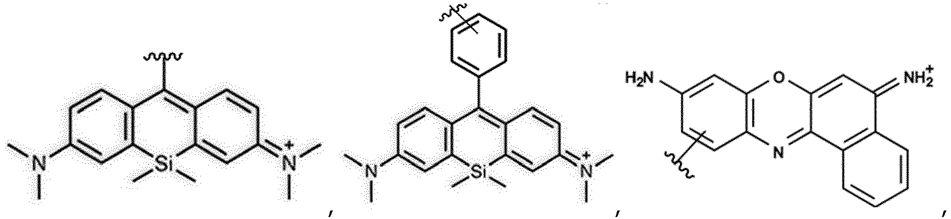

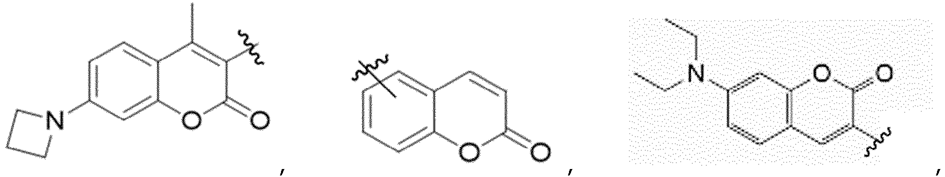

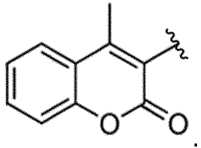

Preferably, the fluorescent moieties comprise the following as well as analogs thereof:

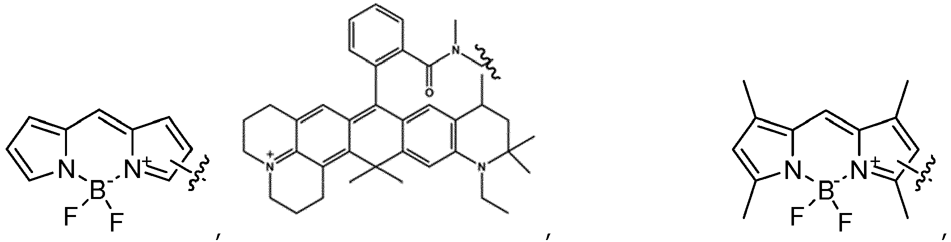

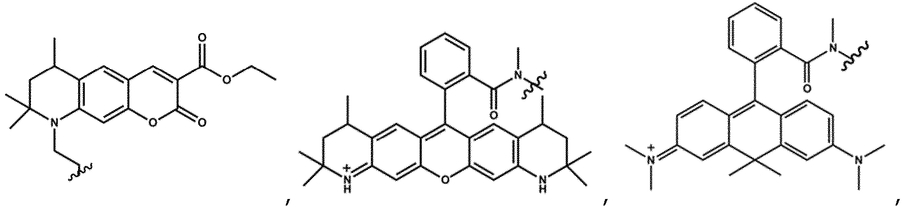

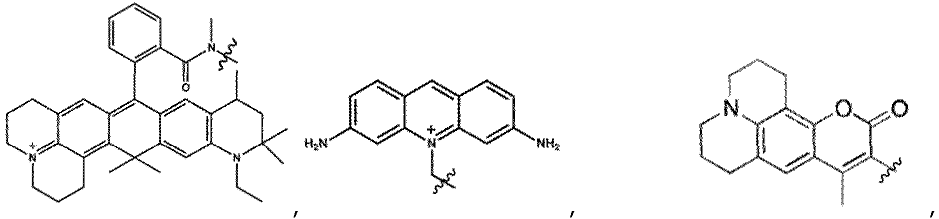

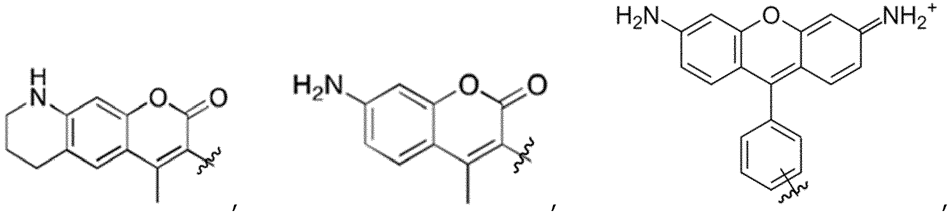

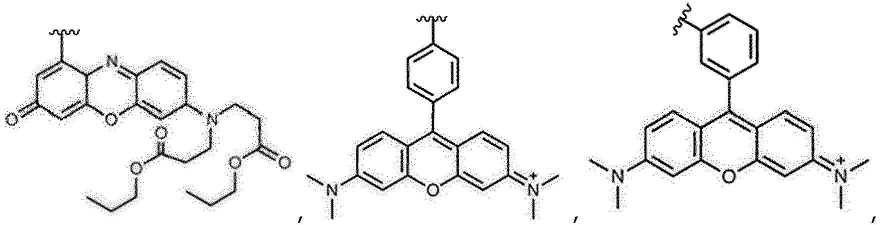

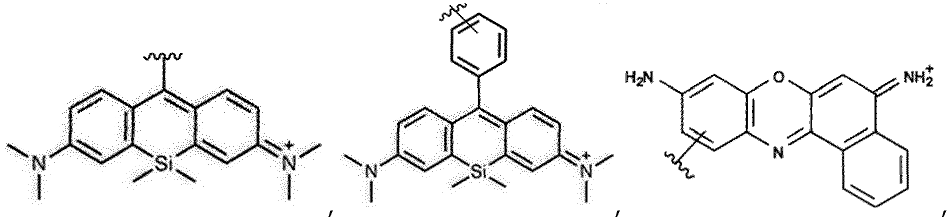

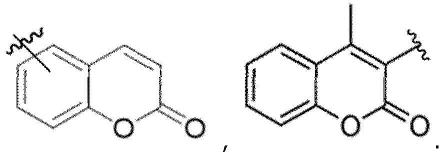

The linker moiety is not particularly limited and includes those known to the skilled person. Exemplary linkers are selected from the group consisting of C₁-C₆-alkylene, C₁-C₆-alkenylene, C₁-C₆-alkynylene, phenylene, C₁-C₆-alkenylene-phenylene, C₁-C₆-alkenylene-(N-C₁-C₆-alkyl)-amide, C₁-C₆-alkenylene ester, C₁-C₆-alkenylene ether, and derivatives thereof.

Optional derivatives include C₁-C₄ alkyl.

Preferably, the linker moiety is selected from phenylene and ethylenyl-phenylene.

Examples of coupling moieties capable of reacting with the double bonds of the binder include dienophiles as known by the person skilled in the art.

Preferably, the coupling moiety comprises a heterocycle such as tetrazine, triazine, thiophene, oxadiazole, diazole, or quinone. Other heterocycles capable of undergoing cycloadditions are applicable as well.

Preferably, the coupling moiety is tetrazine.

Tetrazine is particularly preferred as following cycloaddition it undergoes a retro-Diels Alder reaction to liberate nitrogen gas, resulting in the irreversible formation of a six membered heterocyclic ring containing two nitrogen atoms.

By "cycloaddition adduct" in the context of this disclosure is meant an adduct formed directly from a cycloaddition reaction as well as adducts that are produced following liberation of a gas following a retro-Diels Alder reaction.

Specifically, the following moiety is considered a cycloaddition adduct in the context of this disclosure: 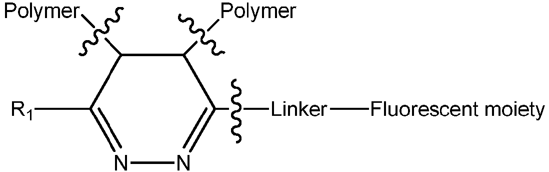 Wherein
Polymer denotes the polymer backbone;
Linker denotes the linker moiety; and
R₁ denotes hydrogen, C₁-C₆-alkyl, C₁-C₆-alkenyl, C₁-C₆-alkynyl, aryl, C₁-C₆-aminoalkyl, C₁-C₆-hydroxyalkyl, C₁-C₆-alkyl ether, C₁-C₆-alkyl ester, or C₁-C₆-dialkyl amide.

Preferably, R₁ denotes hydrogen or methyl.

The above structure depicts a cycloaddition adduct, which has been formed by reacting a polymer backbone double bond with a tetrazine. Coupling may also occur to a pendant side chain on the polymer backbone.

Exemplary cycloaddition adducts formed by reacting a pendant double bond (i.e. a double bond in a side chain) with the coupling moiety of an organic fluorescent tag may be depicted as: 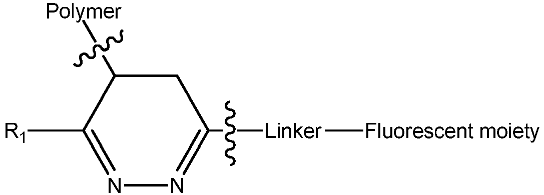 or 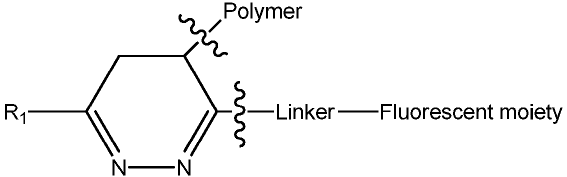 wherein
Polymer denotes the polymer backbone;
Linker denotes the linker moiety; and
R₁ denotes hydrogen, C₁-C₆-alkyl, C₁-C₆-alkenyl, C₁-C₆-alkynyl, aryl, C₁-C₆-aminoalkyl, C₁-C₆-hydroxyalkyl, C₁-C₆-alkyl ether, C₁-C₆-alkyl ester, or C₁-C₆-dialkyl amide.

Preferably, R₁ denotes hydrogen or methyl.

The coupling moiety may be further functionalized. For example, it may be bound to one or more C₁-C₆-alkyl, C₁-C₆-alkenyl, C₁-C₆-alkynyl, aryl, C₁-C₆-aminoalkyl, C₁-C₆-hydroxyalkyl, C₁-C₆-alkyl ether, C₁-C₆-alkyl ester, C₁-C₆-alkyl (N-C₁-C₆-alkyl) amide, or combinations thereof.

Preferably, the coupling moieties are able to do inverse electron demand Diels Alder (IEDDA) reactions with the double bonds of a binder material.

The inverse electron demand Diels Alder reaction is preferred given its high selectivity and fast reaction times. Other reactions within the framework of click chemistry may be applicable as well.

Preferably, the unreacted coupling moiety quenches the fluorescence emitted by the fluorescent moiety, while the bound coupling moiety does not. By unreacted coupling moiety is meant a coupling moiety that has not reacted with an alkene. Similarly, a bound coupling moiety is to be understood as a coupling moiety that has reacted with an alkene, such as by forming an adduct.

The quenching of the unbound coupling moiety ensures that the fluorescent signal will be significantly increased upon binding of the organic fluorescent tag. Therefore, the fluorescence emission of any unreacted organic fluorescent tag preferably does not interfere with the fluorescence emission of the bound organic fluorescent tags to a significant extent.

In this context, by "significant extent" is meant that the fluorescence peak for the bound tag is at least 2 times brighter than the unbound tag, preferably at least 3 times brighter, more preferably at least 10 times brighter.

Since tetrazines are known for their quenching properties, those are particularly preferred as the coupling moiety of the organic fluorescent tag. Tetrazines are able to diminish the fluorescence of a fluorescent moiety either by Förster Resonance Energy Transfer (FRET) or by a Through-Bond Energy Transfer (TBET) process.

Exemplary organic fluorescent tags comprising tetrazines that are capable of quenching the fluorescence of the fluorescent moiety comprise the molecules depicted below. Along with a drawing of each molecule, excitation and emission wavelengths (λₑₓ and λₑₘ respectively) are provided. Further, the light amplification that appears upon reaction of the tetrazine moiety is provided.

Generally speaking, the organic fluorescent tag may comprise
any of the fluorescent moieties described above;
any of the linkers described above; and
any of the coupling moieties described above.

Of course, preferred fluorescent moieties, linkers and coupling moieties may be used, in any combination.

Exemplary (unbound) organic fluorescent tags are selected from:

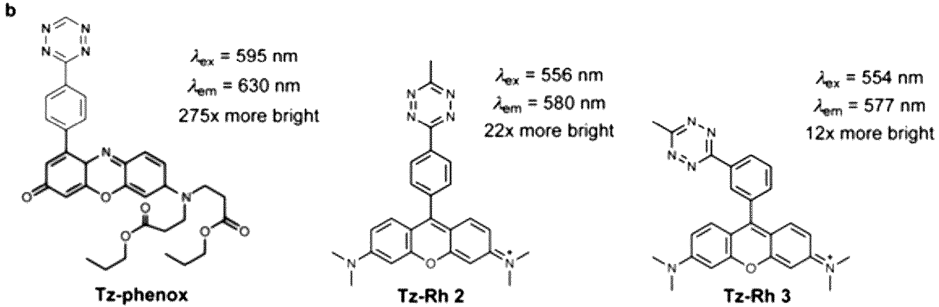

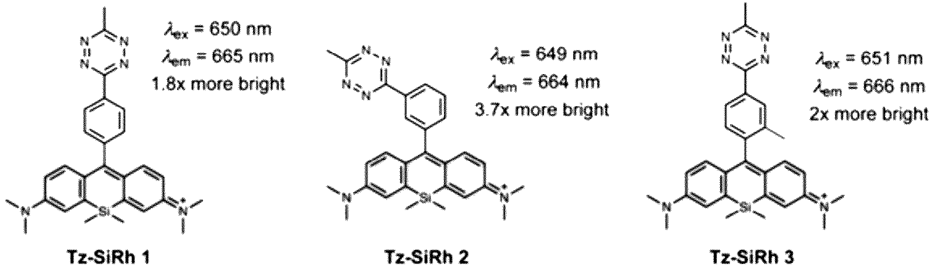

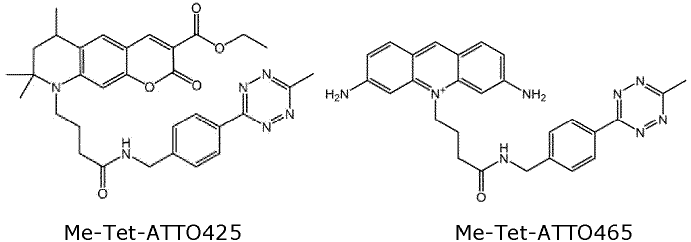

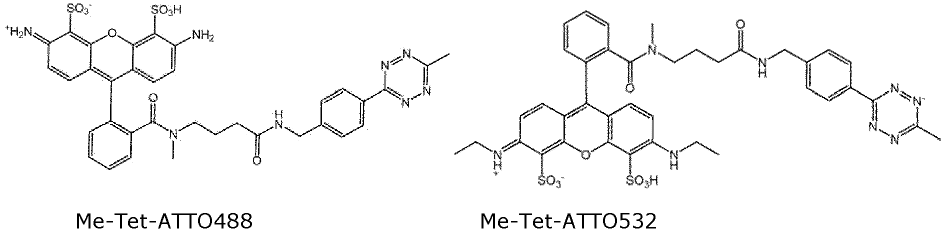

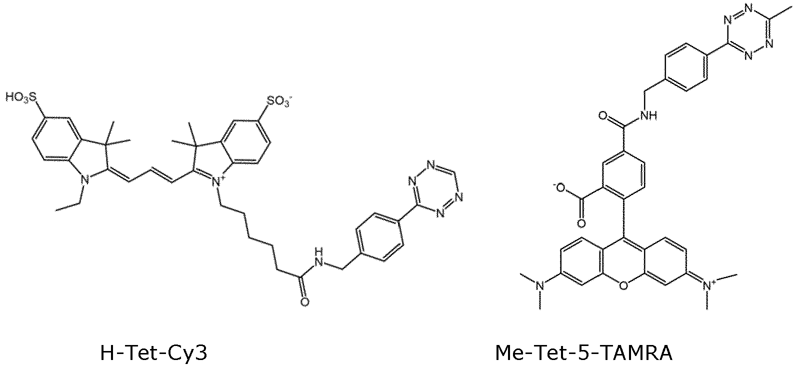

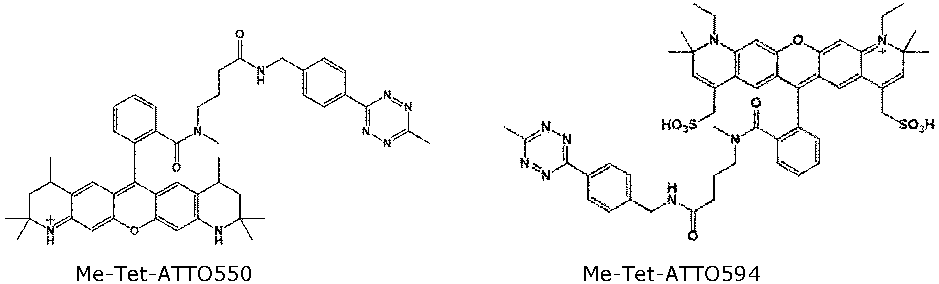

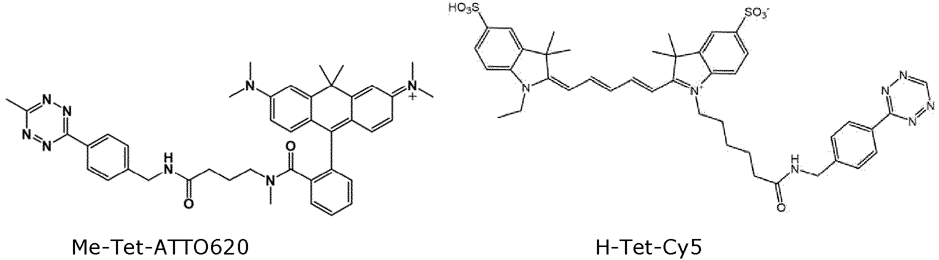

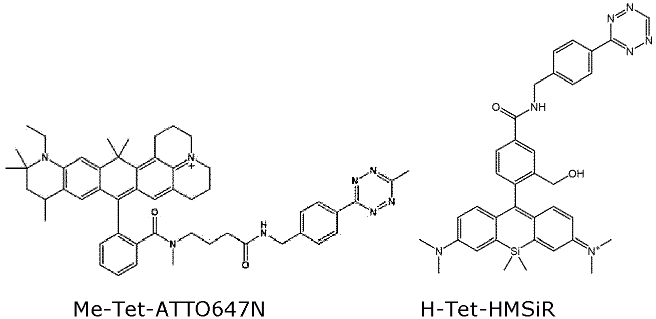

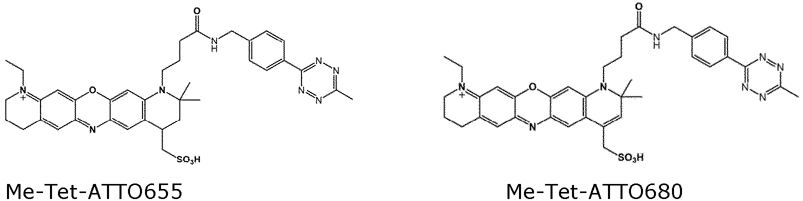

Particularly preferred (unbound) organic fluorescent tags include Tz-phenox, Tz-Rh 2, Tz-Rh 3, Tx-SiRh 1, Me-Tet-ATTO425, Me-Tet-ATTO465, Me-Tet-ATTO550, H-Tet-Cy5, Me-Tet-ATTO550, Me-Tet-ATTO620 and Me-Tet-ATTO647N.

When the binder contains multiple types of alkenes, selectivity towards one type over another may be achieved. For example, styrene butadiene rubber (SBR) contains both internal (secondary) and terminal (primary) alkenes. Given the increased accessibility of the terminal alkenes, these will typically react before the internal ones. This selectivity can be further enhanced by employing relatively sterically hindered organic fluorescent tags.

In an embodiment of the invention, a sterically hindered organic fluorescent tag is used. This advantageously enhances selectivity towards reaction with primary alkenes.

### TAGGING THE BINDER AND VISUALISATION

To tag a binder within an electrode, cross-sectioning of the electrode is required. The method of cross-sectioning is not particularly limited and includes both mechanical and non-mechanical cutting procedures.

Exemplary cross-sectioning methods (or cutting procedures) include sharp-edge cutting, laser cutting, embedded-mechanical polishing, ion-milling, and/or combinations thereof. For example, the electrode may first be cross-sectioned using sharp-edge cutting, whereafter ion milling is used to clean the surface of the cross-sectioned electrode. By providing a clean surface, a higher resolution may be achieved in the subsequent imaging process.

Preferably, the cross-sectioning method comprises ion milling.

After cross-sectioning the electrode, the alkene containing binder can be tagged using an organic fluorescent tag to allow for easy visualisation of binder distribution.

An exemplary method for visualising binder distribution in an electrode comprising the steps of;
i. providing an electrode comprising an electrode active layer, said electrode active layer comprising electrode active material and a binder, wherein the binder comprises a polymer with alkene moieties;
ii. cross-sectioning said electrode;
iii. exposing said electrode to an organic fluorescent tag, wherein said organic fluorescent tag couples to said binder via an alkene moiety to form a tagged binder;
iv. using fluorescence microscopy to visualise the tagged binder.

Typically, exposing said electrode to an organic fluorescent tag, involves soaking the cross sectioned electrode in a mixture comprising organic fluorescent tag and dispersing medium.

Said mixture may have a concentration of organic fluorescent tag of for example between 0.01 µmol pr L and 30 µmol pr L, such as between 0.1 µmol pr L and 25 µmol pr L, for example between 1 µmol pr L and 20 µmol pr L, such as between 2 µmol pr L and 10 µmol pr L, i.e. per litre of dispersing medium.

The role of the dispersing medium is to wet the surface of the exposed electrode, allowing the reaction of the organic fluorescent tag with exposed portions of the polymer.

The choice of dispersing medium for said mixture is not particularly limited and may include solvents such as NMP (N-methyl pyrrolidone), DMSO (dimethyl sulphoxide), DMF (dimethylformamide), ethanol, methanol, ethyl acetate and water. Preferred solvents include NMP, ethanol and water.

Preferably, the dispersing medium is chosen in such a way that the binder polymer does not dissolve in said dispersing medium.

Furthermore, the dispersing medium may be able to swell the binder polymer. Swelling increases the volume around the binder polymer, so that the organic fluorescent tag easily can reach and subsequently react with the alkene moieties. However, too much swelling may cause binder redistribution and or disruption of the integrity of the electrode layer. Therefore, preferably the dispersing medium swells the binder polymer to an extent sufficient to allow reaction of the organic fluorescent tag without compromising the electrode layer.

Mixtures of dispersing media may be used to provide a suitable balance between the capacity for the dispersing media to wet and swell the binder polymer facilitating the reaction, and ensuring the polymer does not fully dissolve or swell to the extent that the electrode layer becomes distorted.

Upon exposure of said electrode to an organic fluorescent tag, unreacted organic fluorescent tag may remain. Optionally, said unreacted organic fluorescent tag is washed away prior to using fluorescence microscopy (step iv.).

Typically, to wash away unreacted organic fluorescent tag, the cross-sectioned electrode is rinsed with a liquid. The liquid may or may not be the same as the dispersing medium used in the mixture comprising the organic fluorescent tag and a dispersing medium.

In an embodiment of the disclosure, the binder is tagged by means of a cycloaddition between an alkene moiety of said binder and the organic fluorescent tag.

In a preferred embodiment of the disclosure, the binder is tagged by means of an inverse electron demand Diels Alder (IEDDA) reaction between an alkene moiety of said binder and the organic fluorescent tag.

Preferably, the cross-sectioned electrode is exposed to the organic fluorescent tag until complete consumption of the organic fluorescent tag.

Typically, the reaction between the binder and the organic fluorescent tag is fast. Therefore, the cross-sectioned electrode may be exposed to the organic fluorescent tag for less than 48 hours, such as less than 24 hours, for example less than 18 hours, such as less than 12 hours.

Furthermore, the cross-sectioned electrode should be exposed to the organic fluorescent tag for a time sufficient to allow reaction, such as at least 1 minute, such as for at least 5 minutes, for example from 5 minutes to 8 hours, or from 10 minutes to 4 hours.

Typically, the cross-sectioned electrode is exposed to the organic fluorescent tag for from 1 minute to 4 hours, preferably from 1 minute to 1 hour.

The reaction between the organic fluorescent tag and the binder polymer can be fast. Often therefore, it is sufficient to soak the cross-sectioned electrode for approximately 1 to 10 minutes.

To speed up the reaction, preferably, exposure of said electrode to an organic fluorescent tag occurs at a temperature between about 20 °C and about 60 °C, for example between about 25 °C and about 55 °C, such as between about 30 °C and about 50 °C. For example, the temperature may be about 40 °C.

Upon tagging, the location of the tagged binder can be visualized using fluorescence microscopy.

Any fluorescence microscopy method known to the skilled person may be used.

Preferably, a super-resolution microscopy (SRM) method is used. SRM encompasses fluorescence imaging techniques with the capability to resolve objects below the classical diffraction limit of optical resolution.

Exemplary methods within the framework of SRM includes structured illumination microscopy (SIM), single-molecule localisation microscopy (SMLM) and stimulated emission depletion (STED).

Structured illumination microscopy (SIM) enhances spatial resolution by collecting information from frequency space outside the observable region.

Stimulated emission depletion microscopy (STED) uses two laser pulses, the excitation pulse for excitation of the fluorophores to their fluorescent state and the STED pulse for the de-excitation of fluorophores by means of stimulated emission. In doing so, fluorophores will reach a focal spot, which can be scanned to retrieve an image.

In SMLM, individual fluorescent molecules are computationally localized from diffraction-limited image sequences and the localizations are used to generate a super-resolution image.

For SMLM, the direct stochastic optical reconstruction microscopy (dSTORM) variant is particularly preferred, since it works with conventional fluorophores. It uses the sequential activation and time-resolved localization of photoswitchable fluorophores to create high resolution images.

Other methods include Re-scan confocal microscopy (RCM), which is a SRM technique based on a standard confocal microscope extended with a re-scan unit in the detection path that projects the emitted light onto a sensitive camera resulting in super resolution images; and confocal laser scanning microscopy (CLSM), which is a specialised fluorescent microscopy technique that increases the optical resolution by using a pinhole aperture to block out-of-focus light within the image.

Unless otherwise indicated, all technical and scientific terms used herein have the same meaning as commonly understood by one of ordinary skill in the art to which this invention pertains.

All embodiments of the invention and particular features mentioned herein may be taken in isolation or in combination with any other embodiments and/or particular features mentioned herein (hence describing more particular embodiments and particular features as disclosed herein) without departing from the disclosure of the invention.

As used herein, the term "comprises" will take its usual meaning in the art, namely indicating that the component includes but is not limited to the relevant features (i.e. including, among other things). As such, the term "comprises" will include references to the component consisting essentially of the relevant substance(s).

Wherever the word 'about' is employed herein in the context of amounts, for example absolute amounts, weights, volumes, sizes, diameters etc., or relative amounts (e.g. percentages) of individual constituents in a composition or a component of a composition (including concentrations and ratios), timeframes, and parameters such as temperatures etc., it will be appreciated that such variables are approximate and as such may vary by ±10%, for example ±5% and preferably ±2% (e.g. ±1%) from the actual numbers specified herein. This is the case even if such numbers are presented as percentages in the first place (for example 'about 10%' may mean ±10% about the number 10, which is anything between 9% and 11%).'

## Claims

1. A method for visualising binder distribution in an electrode comprising the steps of;
i. providing an electrode comprising an electrode active layer, said electrode active layer comprising electrode active material and a binder, wherein the binder comprises a polymer with alkene moieties;
ii. cross-sectioning said electrode;
iii. exposing said electrode to an organic fluorescent tag, wherein said organic fluorescent tag couples to said binder via an alkene moiety to form a tagged binder;
iv. using fluorescence microscopy to visualise the tagged binder.

2. The method of claim 1, wherein said exposing comprises soaking the electrode in a mixture of organic fluorescent tag and dispersing medium.

3. The method of any of the preceding claims, wherein said polymer is not soluble in the dispersing medium.

4. The method of any of the preceding claims, wherein said exposure occurs between about 20 °C and about 60 °C.

5. The method of any of the preceding claims, wherein unreacted organic fluorescent tag is washed away prior to step iv.

6. The method of any of the preceding claims, wherein said organic fluorescent tag couples to said binder to form a tagged binder via a cycloaddition.

7. The method of any of the preceding claims, wherein said organic fluorescent tag couples to said binder to form a tagged binder via an inverse electron demand Diels Alder (IEDDA) reaction.

8. The method of any of the preceding claims, wherein the fluorescence peak for the bound organic fluorescent tag is at least 2 times brighter than the fluorescence emission of any unreacted organic fluorescent tag.

9. The method of any of the preceding claims, wherein the binder comprises polymers or copolymers of butadiene.

10. The method of any of the preceding claims, wherein the binder comprises styrene butadiene rubber (SBR).

11. The method of any of the preceding claims, wherein the cross-sectioning includes mechanical and non-mechanical cutting procedures.
